# EUROPEAN PATENT SPECIFICATION

(11) **EP 1 649 998 B1**
(45) Date of publication and mention of the grant of the patent: **28.03.2007**
(21) Application number: 05109618.8
(22) Date of filing: 17.10.2005
(51) Int. Cl.: B29C 45/00

(54) **Apparatus for and method of moulding and assembling objects consisting of a plurality of components**
Vorrichtung und Verfahren zum Formen und Zusammenfügen von aus mehreren Komponenten bestehenden Objekten
Dispositif et procédé pour mouler et assembler des objets composés de plusieurs composants

(30) Priority: 20.10.2004 IT MI20041989
(43) Date of publication of application: 26.04.2006
(73) Proprietor: Caliberg S.r.l., 24035 Curno, BG (IT)
(72) Inventor: Maggi, Andrea, 24068 Seriate (Bergamo) (IT)
(74) Representative: De Gregori, Antonella

(56) References cited:
- US-A- 5 378 422
- US-A- 5 906 841

## Description

The present invention refers to an apparatus for moulding and assembling objects in many components as well as to a related method.

In the field of moulding of objects made from plastic, such as thermoplastic or thermosetting resins or any material that can be injection moulded, various solutions are known for manufacturing objects made up of two or more assembled components.

A first method consists of producing the two components that make up the finished object separately in many individual moulds and feeding then successively on automatic lines or machines for their assembly into the finished product.

This involves numerous drawbacks both in terms of the number of necessary apparatuses, in other words moulds, assembling machines, feeding systems, and in terms of the assembly process that requires substantial precision in the manipulation of the components and their centring, above all when assembly occurs on planes that are incident to each other and in particular on perpendicular planes.

An apparatus for in-mould assembly of moulded components is known from US-A-5 378 422.

Alternatively, are used moulds that produce co-injected instead of assembled components by injection of more than one resin.

However, not all of the objects made up of many components can be co-injected. Indeed, the need to produce components having very particular and/or highly precise shapes can make it impossible to use this moulding technique.

The purpose of the present invention is that of making a moulding and assembly apparatus as well as a related method for moulding objects in many components and for their assembly on a plane not parallel to the moulding plane, in particular perpendicular, inside the apparatus itself.

Another purpose of the present invention is that of making a moulding and assembly apparatus as well as a related moulding and assembly method also suitable for the production of objects made up of two or more different resins.

Another purpose of the present invention is that of making an apparatus for moulding and assembling objects in many components as well as a related moulding and assembly method, particularly simple, functional and at low costs.

These purposes according the present invention are achieved by making an apparatus for moulding and assembling objects in many components as well as a related moulding and assembly method as outlined in the independent claim.

Further characteristics are foreseen in the dependent claims.

The characteristics and advantages of an apparatus for moulding and assembling objects in many components as well as a related method according to the present invention shall become clearer from the following description, given as an example and not for limiting purposes, referring to the attached schematic drawings, in which:
- figure 1 is a schematic view of the apparatus during the first moulding step according to the method of the present invention, in which the moulds are closed for injection;
- figure 2 is a schematic view of the apparatus of figure 1 in the second step of the method according to the present invention, in which the moulds are open after moulding;
- figure 3 is a schematic view of the apparatus of figure 1 in the third step of the method according to the present invention, in which one of the two sub-components is moved with respect to a moulding plane for assembly;
- figure 4 is a schematic plan view of the mobile part of the apparatus;
- figure 5 shows an enlarged detail of the mobile part of the apparatus in the position of figure 2.

With reference to the figures, an apparatus for moulding and assembling objects in many components is shown wholly indicated with 10.

The apparatus 10 comprises at least two moulds 20 and 30, each of which consists of two interfacing half-moulds 20', 20" and 30', 30", each mobile with respect to the other, and in which each mould comprises a plurality of impressions 21 and 31 for the injection of different sub-components 22 and 32 to be assembled.

More specifically, the two fixed half-moulds 20', 30' and the two mobile half-moulds 20'', 30'' are respectively mounted on two interfacing parts 11 and 12 that constitute a mobile part and a fixed part of a press, or injection machine, not shown.

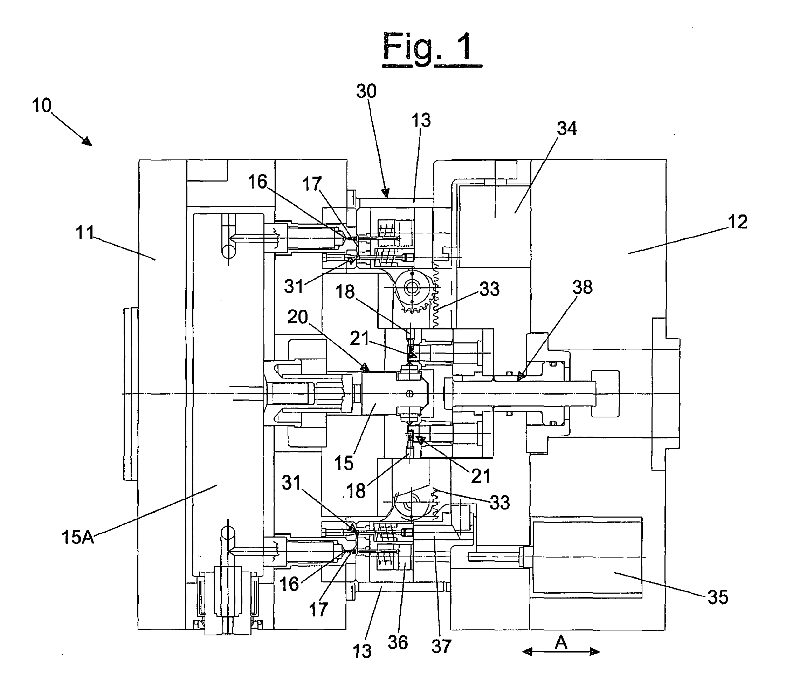

The translation movement of the mobile part 12 with respect to the fixed part 11, exemplified by the double arrow A in figures 1 to 3, is guided through column supports 13.

The first mould 20, i.e. its interfacing half-moulds 20', 20'', are each made in a single body arranged in the central portion of the apparatus 10 and house half-impressions 21' and 21" for a first component 22. The impressions 21, which in the example are four in number, are arranged in the first mould 20 on two symmetrical rows with respect to a middle plane 14 of the apparatus 10.

The number of impressions can be as big as one likes, but for constructive reasons and for the feeding of the resin, in general the number is a power of two.

The second mould 30, i.e. its half-moulds 30', 30'', is divided into two portions arranged on opposite sides with respect to the first mould 20.

Each portion of the second mould 30 carries half-impressions 31' and 31'' for a second component 32 to be assembled on the first component 22, aligned with respect to the row of half-impressions of the first mould 20.

In a non-limiting example embodiment shown in the figures, the sub-components are an aerosol dispenser, which constitutes the first component 22, as well as a preform, or nozzle, which constitutes the second component 32, which must be assembled in a radial seat thereof.

The fixed part 11 of the apparatus 10 comprises two hot chambers 15 and 15A, one for each mould, so that in the moulds 20 and 30 components 22 and 32 of different materials can be moulded, feeding the injectors with a flow rate in proportion to the size of the component.

The injectors 15 and 15A carry a plurality of nozzles 16 that inject the plastic material, in the case of the first mould 20, directly into the impressions 21 and, in the case of the second mould 30, into distribution channels 17 of the resin that connect the impressions 31 together.

The fixed part 11 of the apparatus 10 also carries, in the exemplification shown as an example, side cores 18 that are radially mobile with respect to the half-impressions 21' for the formation of the seats for the assembly of the second component 32.

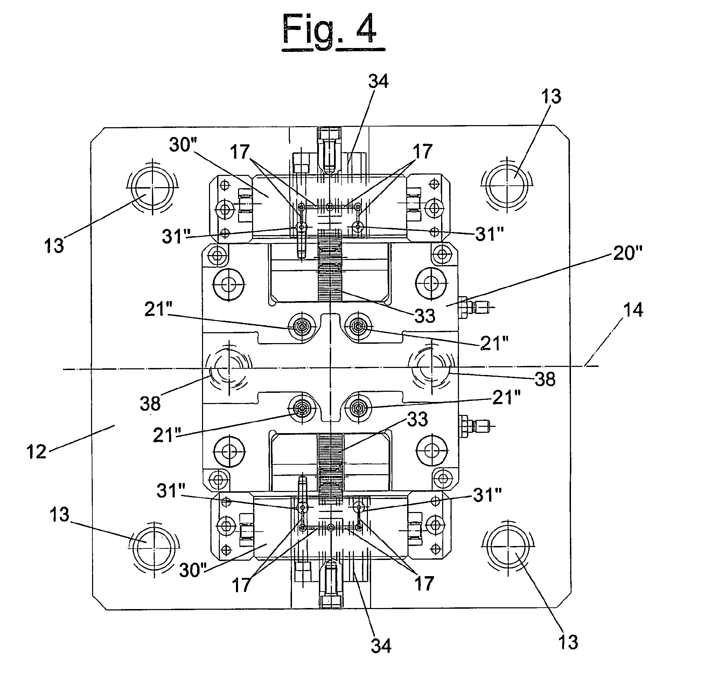

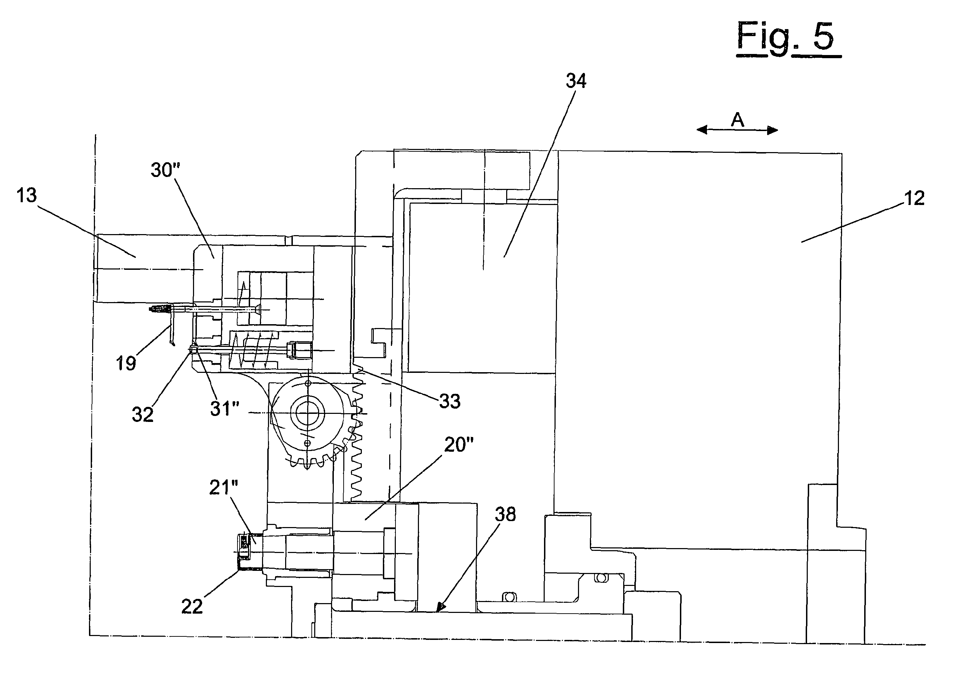

In the mobile part of the apparatus, shown in the plan view of figure 4 and in the enlarged detail of figure 5, each of the two portions of the second half-mould 30'' is hinged to the part 12 to place the different components in position for assembly through a rotation, or flip, by an angle which in the described case is equal to 90°, of such portions.

Such a movement is determined by an actuator group comprising a rack mechanism 33 commanded by a pneumatic cylinder with double effect piston 34.

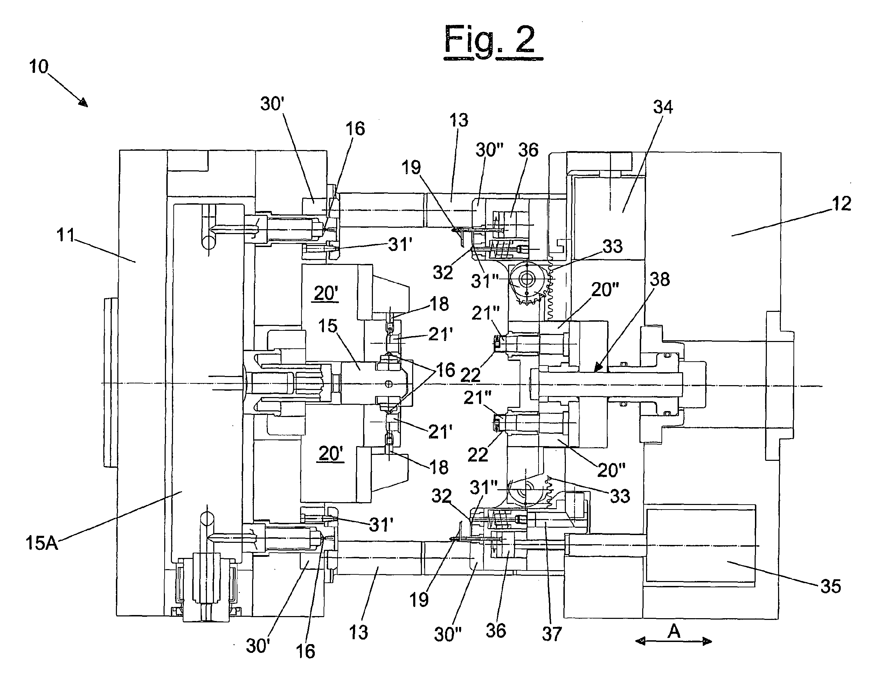

On the mobile part 12, pneumatic piston actuators 35 are also foreseen that interact in some steps of the method according to the present invention on different elements of the secondary half-moulds 30''. Indeed, figure 2 shows the expulsion step of sprue 19 through the engagement of the actuator on a first linear thruster, or plate 36.

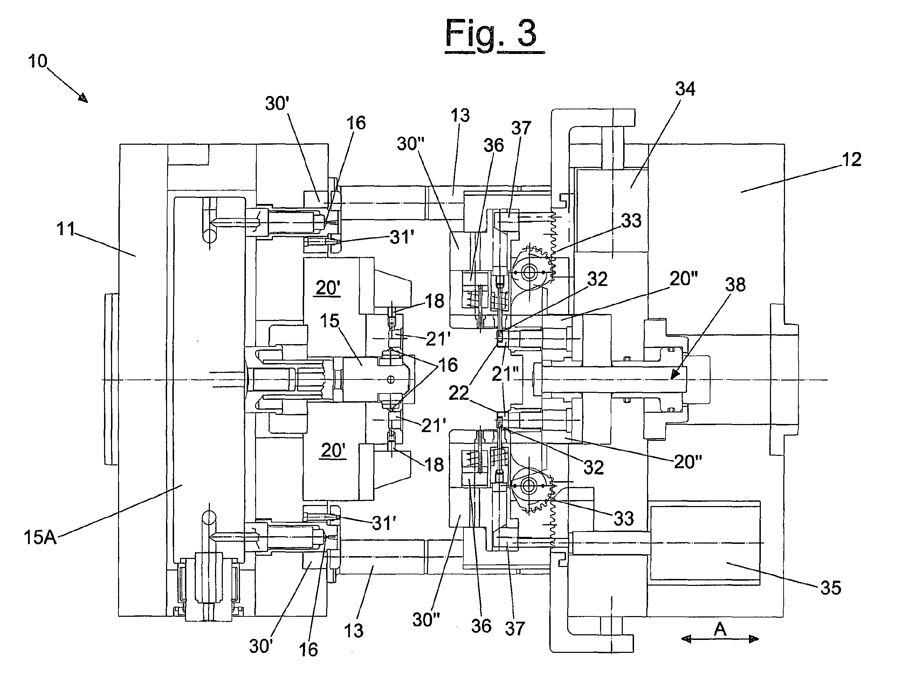

Figure 3, on the other hand, shows the assembly step during which the actuator 35, acting on a second thruster, or pin 37, angled at 45°, causes the extraction of the second component 32 from the impression 31'' and its introduction through translation into the radial seat of the first component 22, i.e. the assembly of the object made from plastic.

The mobile part 12 also comprises an ejector 38 of the assembled objects, which carries out a last step, not shown, of ejecting the assembled objects from the apparatus 10.

Figure 1 illustrates what happens during the first step of the moulding method according to the present invention. In this step the moulds 20 and 30 are brought together and the resin is injected into the impressions 21 and 31 to create the sub-components 22 and 32.

After the resin has cooled down, in the second step of the method according to the present invention, the half-moulds are moved apart and the apparatus 10 is in the state of figure 2, in which the moulded sub-components 22 and 32 stay on the impressions of the mobile half-moulds 21" and 31" .

In this step the actuator 35 thrusts the plate 36 that ejects the sprue 19 then going back into position.

The assembly step, shown schematically in figure 3, foresees the flipping of the two portions of the second half-mould 30" of the mobile plate 12 and the translation of the impression 31" of the second component, carrying such a moulded component 32, for the insertion thereof in the seat of the first component 22.

Finally, during the last step of resetting the initial conditions of the mobile members, the ejector 38 acts to eject the finished pieces that are supported on the impressions 21" of the mobile half-mould 20''.

The apparatus for moulding and assembling objects in many components as well as the related moulding and assembling method, object of the present invention, have the advantage of carrying out the simultaneous moulding, inside the same mould, of components consisting of different resins and their assembly on planes that are incident to each other and in particular on perpendicular planes.

A further advantage consists of moulding without sprue of the first component.

## Claims

1. Apparatus for moulding and assembling objects in many components comprising at least two moulds (20 and 30), each of which consists of two half-moulds (20', 20'' and 30', 30'') mounted respectively on a fixed part (11) and on a mobile part (12) of a press, wherein each mould (20, 30) comprises a plurality of impressions (21 and 31) for the production through injection of different components (22, 32) to be assembled, in which said half-moulds (20', 20'') of a first base mould (20) are stably arranged on said parts (11, 12) and **in that** said half-moulds (30', 30'') of a second mould (30) are divided into two portions arranged on opposite sides with respect to said base half-moulds (20', 20''), said portions being respectively stably locked to said fixed part (11) as well as hinged to said mobile part (12), said hinged portions being connected to an actuator group (33, 34), suitable for moving each component (32) for assembly on the other components (22) on a plane not parallel to the moulding plane of said two components (22, 32).

2. Apparatus according to claim 1, **characterised in that** said actuator group comprises a rack mechanism (33) commanded by a pneumatic cylinder with double effect piston (34).

3. Apparatus according to claim 1, **characterised in that** said impressions (21) for a first component (22) are arranged in the first base mould (20) on two symmetrical rows with respect to a middle plane (14) of symmetry and **in that** said impressions (31) for a second component (32) to be assembled on the first component (22) are arranged on every portion of the second mould (30) in a single row.

4. Apparatus according to claim 1, **characterised in that** said two portions of the secondary half-moulds (30'') hinged to said mobile part (12) each comprise a first linear thruster (36) for the ejection of sprues (19) and a second thruster (37) angled at 45° for the extraction of a second component (32) from the impression (31) and its introduction through translation into a seat of the first component (22) for the assembly of a finished object.

5. Apparatus according to claim 4, **characterised in that** said thrusters (36, 37) are pneumatically actuated.

6. Apparatus according to claim 1, **characterised in that** said fixed part (11) comprises a hot chamber (15, 15A) for every mould (20, 30), said hot chambers (15, 15A) being able to be fed with different materials and with a flow rate that can be altered in relation to the size of said components (22, 32).

7. Apparatus according to claim 6, **characterised in that** said hot chamber (15) of said first mould (20) comprises a plurality of nozzles (16) for the injection of plastic material directly into the impressions (21) without sprue.

8. Apparatus according to claim 6, **characterised in that** said hot chamber (15A) of said second mould (30) comprises a plurality of nozzles (16) for the injection of plastic material into distribution channels (17) arranged between said impressions (31).

9. Apparatus according to claim 1, **characterised in that** said impressions (21) for a first component (22) are impressions for an aerosol dispenser and **in that** said impressions (31) for a second component (32) are impressions for a preform, or nozzle, suitable for being assembled in a recess of said dispenser.

10. Moulding and assembly process that uses the apparatus according to the previous claims in which the following series of operations is carried out, under normal operating conditions, cyclically, identifiable as four steps:
- a first step in which said half-moulds (20', 20'', 30', 30'') are brought together and the resins are injected into impressions (21, 31) for the moulding of at least two different components (22, 32);
- a second step in which said half-moulds (20', 20'', 30', 30'') are moved apart, said components (22, 32) remaining contained in said impressions (21'', 31") on the mobile part (12);
- a third step in which the portions of the second half-mould (30'') hinged to the mobile part (12) are flipped back and the impressions (31'') of said portions are translated to couple the two moulded components (22, 32) to define the assembled finished object;
- a fourth step in which the two hinged portions (30'') are taken back into the initial position and the ejector (38) of the finished objects is activated.

## Patentansprüche

1. Vorrichtung zum Formen und Zusammenfügen von Objekten mit vielen Komponenten, umfassend mindestens zwei Formen (20 und 30), wobei jede aus zwei Halbformen (20', 20" und 30', 30") besteht, welche auf einem befestigten Teil (11) beziehungsweise auf einem beweglichen Teil (12) einer Presse angebracht sind, wobei jede Form (20, 30) mehrere Vertiefungen (21 und 31) für die Herstellung von verschiedenen zusammenzufügenden Komponenten (22, 32) durch Einspritzen umfasst, wobei die Halbformen (20', 20") einer ersten Basisform (20) fest auf den Teilen (11, 12) angeordnet sind und wobei die Halbformen (30', 30") einer zweiten Form (30) in zwei Abschnitte unterteilt sind, welche auf gegenüberliegenden Seiten bezüglich der Basishalbformen (20', 20") aufgeteilt sind, wobei die Abschnitte fest an dem festen Teil (11) befestigt beziehungsweise gelenkig an dem beweglichen Teil (12) angebracht sind, wobei die gelenkig angebrachten Abschnitte mit einer Betätigungsgruppe (33, 34) verbunden sind, welche in der Lage ist, jede Komponente (32) zum Zusammenbau auf den anderen Komponenten (22) auf einer Ebene zu bewegen, welche nicht parallel zu der Formungsebene der zwei Komponenten (22, 32) ist.

2. Vorrichtung nach Anspruch 1, **dadurch gekennzeichnet, dass** die Betätigungsgruppe einen Zahnstangenmechanismus (33) umfasst, welcher von einem pneumatischen Zylinder mit einem Doppeleffektkolben (34) angetrieben wird.

3. Vorrichtung nach Anspruch 1, **dadurch gekennzeichnet, dass** die Vertiefungen (21) für eine erste Komponente (22) auf zwei symmetrischen Reihen bezüglich einer mittleren Symmetrieebene (14) in der ersten Basisform (20) angeordnet sind und dass die Vertiefungen für eine zweite auf der ersten Komponente (22) zusammenzufügende Komponente (32) auf jedem Abschnitt der zweiten Form (30) in einer einzigen Reihe angeordnet sind.

4. Vorrichtung nach Anspruch 1, **dadurch gekennzeichnet, dass** die zwei Abschnitte der zweiten Halbformen (30") gelenkig an dem beweglichen Teil (12) angebracht sind, wobei jedes eine erste lineare Druckvorrichtung (36) zum Ausstoßen von Anguss (19) und eine zweite Druckvorrichtung (37), welche mit 45° abgewinkelt ist, für das Herausziehen einer zweiten Komponente (32) von der Vertiefung (31) und ihre Einführung durch eine Umsetzung in eine Aufnahme der ersten Komponente (22) für die Montage eines fertigen Objekts umfasst.

5. Vorrichtung nach Anspruch 4, **dadurch gekennzeichnet, dass** die Druckvorrichtungen (36, 37) pneumatisch betrieben werden.

6. Vorrichtung nach Anspruch 1, **dadurch gekennzeichnet, dass** der befestigte Teil (11) eine heiße Kammer (15, 15A) für jede Form (20, 30) umfasst, wobei die heißen Kammern (15, 15A) mit unterschiedlichen Materialien und mit einer Flussrate gefüllt werden können, welche in Abhängigkeit von der Größe der Komponenten (22, 32) geändert werden können.

7. Vorrichtung nach Anspruch 6, **dadurch gekennzeichnet, dass** die heiße Kammer (15) der ersten Form (20) mehrere Düsen (16) für das Einspritzen eines Kunststoffmaterials direkt in die Vertiefungen (21) ohne einen Anguss umfasst.

8. Vorrichtung nach Anspruch 6, **dadurch gekennzeichnet, dass** die heiße Kammer (15A) der zweiten Form (30) mehrere Düsen (16) für das Einspritzen von Kunststoffmaterial in Verteilungskanäle (17), welche zwischen den Vertiefungen (31) angeordnet sind, umfasst.

9. Vorrichtung nach Anspruch 1, **dadurch gekennzeichnet, dass** die Vertiefungen (21) für eine erste Komponente (22) Vertiefungen für einen Aerosolspender sind und dass die Vertiefungen (31) für eine zweite Komponente (32) Vertiefungen für eine Vorform oder eine Düse sind, welche in einer Vertiefung des Spenders montiert sein kann.

10. Verfahren zum Formen und Zusammenfügen, welches die Vorrichtung nach den vorherigen Ansprüchen verwendet, wobei die folgenden Vorgänge unter normalen Betriebsbedingungen, zyklisch ausgeführt werden, welche durch vier Schritte identifizierbar sind:
- einem ersten Schritt, in welchem die Halbformen (20', 20", 30', 30") zusammengebracht werden und die Harze in Vertiefungen (21, 31) gespritzt werden, um mindestens zwei verschiedene Komponenten (22, 32) auszuformen;
- einem zweiten Schritt, in welchem die Halbformen (20', 20", 30', 30") auseinander bewegt werden, wobei die Komponenten (22, 32) in den Vertiefungen (21", 31 ") auf dem beweglichen Teil (12) verbleiben;
- einem dritten Schritt, in welchem die Abschnitte der zweiten Halbformen (30"), welche gelenkig an dem beweglichen Teil (12) angebracht sind, zurück geklappt werden und die Vertiefungen (31") der Abschnitte versetzt werden, um die zwei geformten Komponenten (22, 32) zu koppeln, um das zusammengefügte fertige Objekt zu definieren;
- einem vierten Schritt, in welchem die zwei gelenkig angebrachten Abschnitte (30") in die anfängliche Position zurück gebracht werden und der Auswerfer (38) der fertigen Objekte aktiviert wird.

## Revendications

1. Dispositif permettant de mouler et d'assembler des objets en plusieurs composants comprenant au moins deux moules (20 et 30), composés chacun de deux moitiés de moule (20', 20" et 30', 30") montées respectivement sur une partie fixe (11) et sur une partie mobile (12) d'une presse, dans lequel chaque moule (20, 30) comprend une pluralité d'empreintes (21 et 31) pour la production, par injection, de différents composants (22, 32) à assembler, dans lequel lesdites moitiés de moule (20', 20") d'un premier moule de base (20) sont disposées de manière stable sur lesdites parties (11, 12), et lesdites moitiés de moule (30', 30") d'un second moule (30) sont divisées en deux parties disposées sur des côtés opposés par rapport audites moitiés de moule de base (20', 20"), lesdites parties étant respectivement verrouillées de manière stable à ladite partie fixe (11) et reliées de manière articulée à ladite partie mobile (12), lesdites parties reliées de manière articulée étant raccordées à un groupe actionneur (33, 34) prévu pour déplacer chaque composant (32) pour l'assembler aux autres composants (22) sur un plan non parallèle au plan de moulage desdits deux composants (22, 32).

2. Dispositif selon la revendication 1, **caractérisé en ce que** ledit groupe actionneur comprend un mécanisme à crémaillère (33) commandé par un vérin pneumatique avec un piston double effet (34).

3. Dispositif selon la revendication 1, **caractérisé en ce que** lesdites empreintes (21) pour un premier composant (22) sont disposées dans le premier moule de base (20) sur deux rangées symétriques par rapport à un plan médian (14) de symétrie et **en ce que** lesdites empreintes (31) pour un deuxième composant (32) à assembler au premier composant (22) sont disposées sur chaque partie du second moule (30) sur une seule rangée.

4. Dispositif selon la revendication 1, **caractérisé en ce que** lesdites deux parties des moitiés de moule secondaire (30") reliées de manière articulée à ladite partie mobile (12) comprennent chacune un premier expulseur linéaire (36) pour l'éjection de carottes (19) et un deuxième expulseur (37) situé à un angle de 45° pour l'extraction d'un deuxième composant (32) hors de l'empreinte (31) et son introduction, par translation, dans un siège du premier composant (22) pour l'assemblage en un objet fini.

5. Dispositif selon la revendication 4, **caractérisé en ce que** lesdits expulseurs (36, 37) sont actionnés par voie pneumatique.

6. Dispositif selon la revendication 1, **caractérisé en ce que** ladite partie fixe (11) comprend une chambre chaude (15, 15A) pour chaque moule (20, 30), lesdites chambres chaudes (15, 15A) pouvant être alimentées avec différentes matières et à un débit qui peut être modifié en fonction de la taille desdits composants (22, 32).

7. Dispositif selon la revendication 6, **caractérisé en ce que** ladite chambre chaude (15) dudit premier moule (20) comprend une pluralité de buses (16) pour l'injection de matière plastique directement dans les empreintes (21) sans carotte.

8. Dispositif selon la revendication 6, **caractérisé en ce que** ladite chambre chaude (15A) dudit second moule (30) comprend une pluralité de buses (16) pour l'injection de matière plastique dans des canaux de distribution (17) disposés entre les empreintes (31).

9. Dispositif selon la revendication 1, **caractérisé en ce que** lesdites empreintes (21) pour un premier composant (22) sont des empreintes pour un diffuseur d'aérosol et **en ce que** lesdites empreintes (31) pour un deuxième composant (32) sont des empreintes pour une préforme, ou une buse, prévue pour être montée dans un évidement dudit diffuseur.

10. Procédé de moulage et d'assemblage qui utilise le dispositif selon les revendications précédentes, dans lequel la suite d'opérations suivantes est réalisée, en conditions de fonctionnement normales, de manière cyclique, identifiable par quatre étapes:
- une première étape dans laquelle lesdites moitiés de moule (20', 20", 30', 30") sont réunies et les résines sont injectées dans les empreintes (21, 31) pour le moulage d'au moins deux composants différents (22, 32) ;
- une deuxième étape dans laquelle lesdites moitiés de moule (20', 20", 30', 30") sont séparées, lesdits composants (22, 32) restant à l'intérieur desdites empreintes (21", 31") sur la partie mobile (12) ;
- une troisième étape dans laquelle les parties du second demi-moule (30") reliées de manière articulée à la partie mobile (12) sont retournées et les empreintes (31") desdites parties subissent un mouvement de translation pour coupler les deux composants moulés (22, 32) afin de définir l'objet fini assemblé ;
- une quatrième étape dans laquelle les deux parties reliées de manière articulée (30") sont renvoyées en position initiale et l'éjecteur (38) des objets finis est activé.
